Europäisches Patentamt

European Patent Office

Office européen des brevets

(11) Publication number: **0 386 830**
**A2**

# EUROPEAN PATENT APPLICATION

(21) Application number: **90200474.6**

(51) Int. Cl.⁵: **B60K 3/02**

(22) Date of filing: **28.02.90**

(30) Priority: **08.03.89 MX 15187**

(43) Date of publication of application:
**12.09.90 Bulletin 90/37**

(84) Designated Contracting States:
**AT BE CH DE DK ES FR GB GR IT LI LU NL SE**

(71) Applicant: **Tostado Tostado, Manuel**
**Rio Tomellin No. 7, Paseos de Churubusco**
**Mexico D.F. 09030(MX)**

(72) Inventor: **Tostado Tostado, Manuel**
**Rio Tomellin No. 7, Paseos de Churubusco**
**Mexico D.F. 09030(MX)**

(74) Representative: **Lips, Hendrik Jan George, Ir.**
**et al**
**HAAGSCH OCTROOIBUREAU Breitnerlaan**
**146**
**NL-2596 HG Den Haag(NL)**

(54) **A vehicle propelled by a pneumatic-mechanical system.**

(57) A vehicle propelled by a mechanical-pneumatic system that consists in a compressed air storage source from which this fluid is selectively supplied via a supply-regulating valve element to a power assembly that converts said pneumatic energy into mechanical work to displace the vehicle.

FIG.1

EP 0 386 830 A2

## A vehicle propelled by a pneumatic-mechanical system

### BACKGROUND AND FIELD OF THE INVENTION

In relation to vehicles, there is a wide variety of antecedents to be seen as regards alternate power sources. However, the majority are driven by internal combustion engines. Of recent creation and in the experimental stage, there are, in addition, electrically propelled vehicles and those which use solar energy.

The importance of automotive vehicles today in transporting millions of people or any type of object around the world for short or long distances is well known. Obviously, this need to move via automotive vehicles, far from decreasing, tends to increase in order to cover transportation needs.

Regardless of the big advantages offered by conventional automotive vehicles, all operating by means of fuels derived from petroleum (gasoline or diesel), there is already increasing concern for environmental health, particularly evident in the largest, most populated cities of the world, where thousands of vehicles operate daily, and in cases like that of Mexico City and the surrounding urban zones, where figures reach approximately three million vehicles.

As a result of the large number of vehicles in circulation, a worldwide pollution problem of alarming dimensions has arisen as a result of toxic pollutants issuing from these automotive vehicles into the atmosphere. Even though significant efforts have been made to develop technology for non-polluting apparatus, in an attempt to attenuate the high environmental pollution levels via adaptation of these apparatus to automotive vehicles, it is important to point out that in some cases, they have not received the appropriate mass diffusion and have not been widely accepted. Further, vehicle owners appear to diminish the importance of these devices and prefer to save their cost and have the pollution problem resolved through steps that essentially do not affect their transportation routines.

Independently of the environmental problem created with the use of vehicles driven by internal combustion engines, there is a significantly high cost involved in the purchase of this type motor vehicle, with the corresponding maintenance cost which is necessary at certain periods in order to keep the unit in a non polluting state. To a certain degree, this represents a distant aspiration for the great majority of people who are not able to buy a vehicle of this type.

Added to this, the technology developed in this type of machine is highly specialized and therefore requires skilled labor, which is necessarily expensive.

### SUMMARY OF INVENTION

The first purpose, basically the most important of all those that will be suggested in this application, is to provide a new transportation vehicle that differs substantially from the conventional ones, as it does not incorporate the classic drive system of automotive vehicles, that is, the internal combustion engine; rather, its propulsion is by means of a mechanical-pneumatic system. Obviously, this makes use of the traditional fuels such as gasoline or diesel to obtain the motive power of the new unit proposed here unnecessary.

Another purpose of the invention is to propose a new vehicle, one hundred percent non-polluting, which only requires pressurized air to operate, that is, a vehicle capable of being driven pneumatically is proposed.

Still another purpose of this invention is to provide a new car unit with extraordinarily simple mechanics, resulting in low cost and high practical value.

The foregoing purposes and some others will be evident throughout the description of the invention, for which sufficient figures are included to allow a clear, complete view of the invention claimed.

### DESCRIPTION OF THE FIGURES OF THE INVENTION

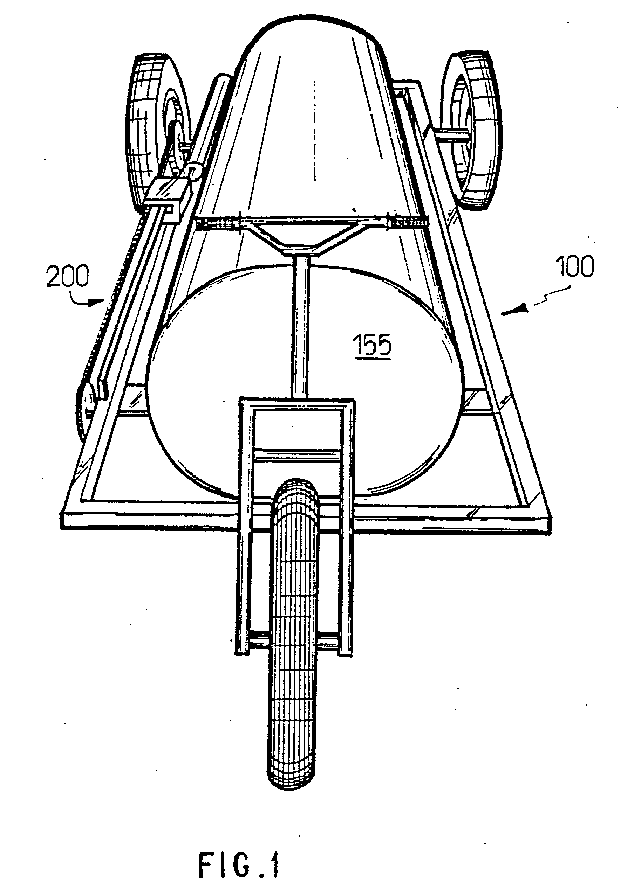

Figure 1 is a perspective view illustrating preferentially the technical concept of the automotive unit seen substantially from above.

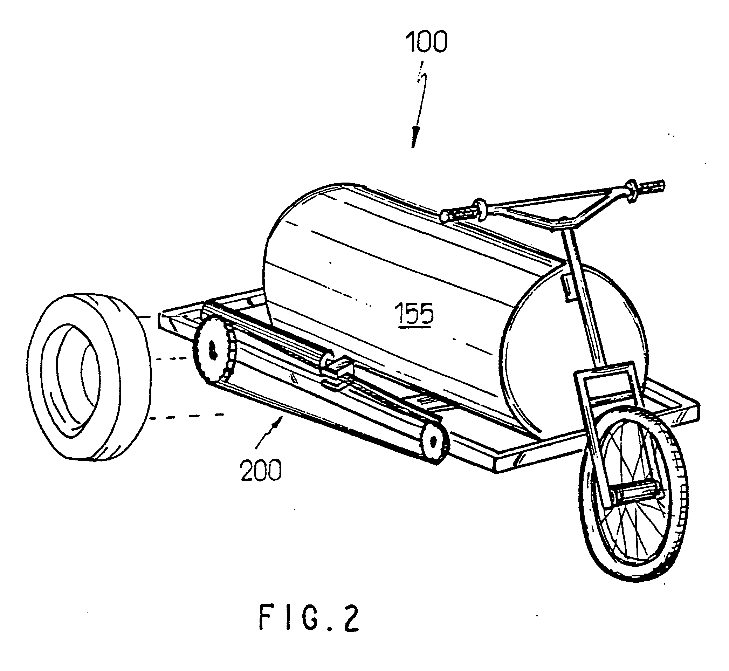

Figure 2 represents the vehicle of the invention again shown in semilateral perspective in order to illustrate the arrangement of the motor assembly.

Figure 3 illustrates the motor assembly, seen laterally, whereby sufficient moving power is obtained to displace the vehicle.

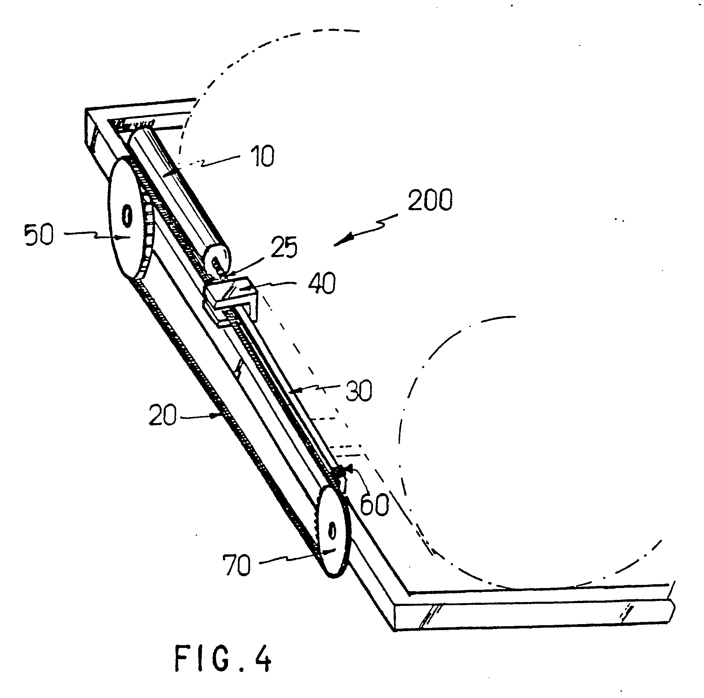

Figure 4 corresponds to a partial view of the vehicle, showing a closeup of the motor assembly, essential part of the invention.

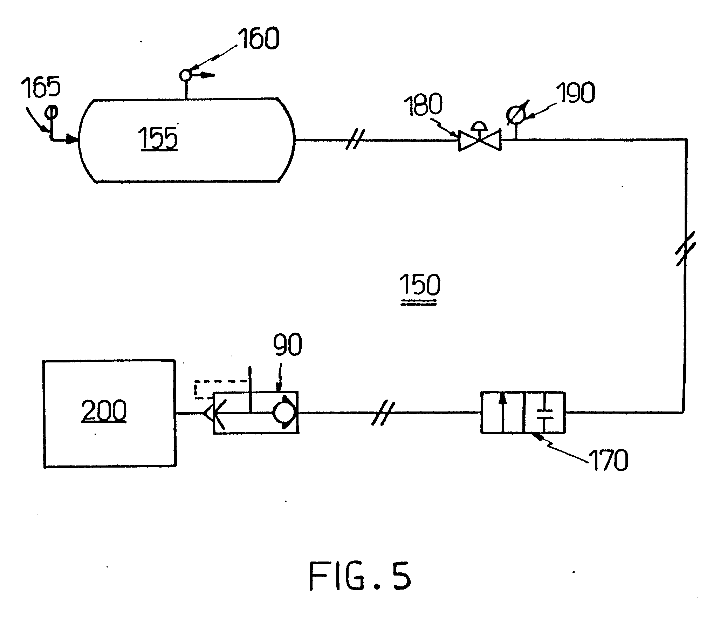

Figure 5 is a schematic diagram of the pneumatic installation incorporated to the new vehicle.

### DETAILED DESCRIPTION OF THE INVENTION

The vehicle 100 of this invention comprises a pneumatic assembly 150 connected directly to a power assembly 200 to which compressed air is supplied to generate the movement of the vehicle. The pneumatic assembly 150 consists in a compressed air storage tank 155 with a capacity as required, provided with a corresponding safety valve 160 and an air supply valve 165 to reload said tank 155.

By means of a compressed air supply valve 170, the power assembly 200 is fed, which receives such pneumatic power in a pneumatic drive element including at least one cylinder 10 having a piston member (the latter not shown) and connected to the remaining elements of the assembly 200 via the piston rod 25. The air supply valve 170 controls the continuous injection of compressed air to the power assembly via the pipe 45 connected to the cylinder 10, whereby the element 40 move in a straight line, sliding along a guide bar 30 for a predetermined length substantially equivalent to the stroke of cylinder 10.

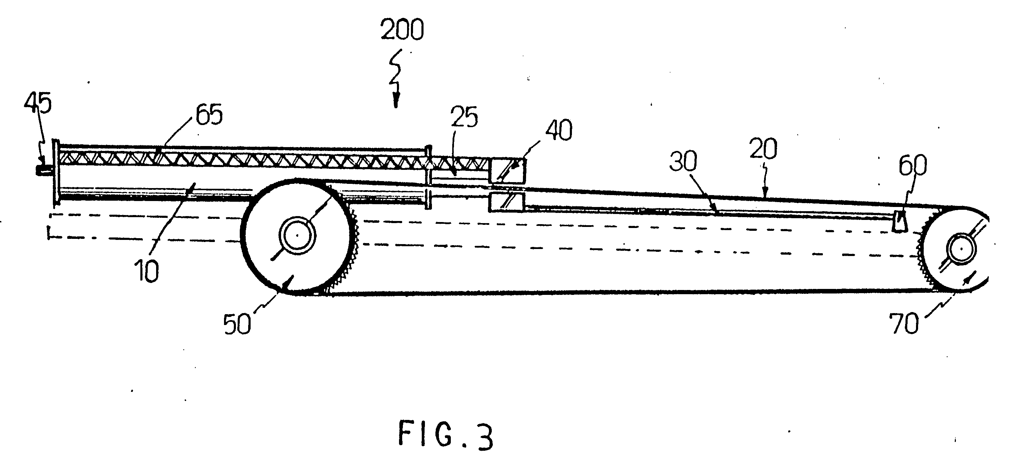

In the power assembly 200 a chain element 20 is provided, to connect a pair of spur wheels or sprockets 50, 70 separated from each other, and in the case of the spur wheel 50, its position corresponds, for instance, to that of the axis of the back wheels of the vehicle. A ratchet mechanism is adapted to the center of the spur wheel 50 in such a way that on each injection of compressed air to cylinder 10, the element 40 slides in a straight line along the guide bar 30 to a stopper 60 which delimits the extension of the forward movement of the element 40 that is attached to the piston member rod 25. Immediately afterward, the element slides in the opposite direction to its original position (that shown in figure 3).

It is important to point out that chain 20 is firmly connected to element 40 by any appropriate means, so that both elements (20, 40) are displaced simultaneously and in a reciprocating fashion, in a forward movement to the stopper 60 and a return movement to the position originally held by both interconnected elements (20, 40).

In accordance with the invention, the ratchet mechanism of the power assembly allows a first working displacement (forward) of the chain element 20 and of the sliding element 40, and a second non-operational displacement (that of return) to retake the position of start of both reciprocating elements prior to the working displacement.

In order for the return displacement of the elements 20 and 40 to be quick, similar to the forward displacement, there is a quick-relief valve 90 adapted on the posterior part of cylinder 10. This relief valve 90 opens in the absence of pneumatic pressure in its interior, to disengage from the pneumatic-mechanical system the charge of air recently used to displace forwardly the piston member rod 25 along the cylinder. This operation diminishes any effect of opposition against the return of the rod 25, whereby the reciprocating movement of the involved elements of the power assembly is uniform and fast in both directions.

In order to facilitate still more the return displacement of the elements 40 and 35, a spring element 65 is also provided, said spring 65 being connected to element 40 on the one hand, and by its other end to any appropriate means, such as, for example, that indicated in figure 3, in order to take advantage of the natural retraction tendency of this spring and allow the fast return of the elements 40 and 35 to the initial position (that shown in figure 3).

The vehicle's pneumatic assembly is also provided with a supply regulator valve 180 and a manometer 190 whereby the desired pressure of the air flow to the power assembly is controlled. Depending on the power required for the vehicle, the driver can increase or decrease the air flow directed to the power assembly by simply opening or closing said valve 180.

Another innovative characteristic of the vehicle's pneumatic-mechanical system is the advantage of totally stopping the flow of air from the storage tank 155 to the power assembly 200 when the vehicle is momentarily stopped -for example in traffic jams- very frequent in large cities -or when required by traffic lights. This feature makes it possible to take maximum advantage of the air contained in the tank 155 and, in the end, provides the opportunity to move for a longer time and a greater distance to the benefit of the user besides not polluting when idling, the worst polluting condition for an internal combustion engine.

The compressed air supply and storage tank 155 illustrated in the figures of the invention is only one example of one of the many forms that this element of the supply system 150 can adopt. Likewise, the elements inherent in a vehicle, such as the steering wheel or handlebars, brake system, gear box, accelerator or activation element of the valve 170 have not been shown in the drawings, as these elements can be adapted to the vehicle in accordance with conventional procedures and techniques. However, the fundamental technical concept for driving the vehicle has hopefully been shown with sufficient clarity for an expert in the field to fully understand it.

## Claims

1. A vehicle propelled by a pneumatical-mechanical system characterized by
   a) a pneumatic assembly comprising a compressed air storage tank and an air supply means; and

b) a power assembly connected to the pneumatic assembly through an air line, said power assembly being fed with compressed air from the air storage tank to transform the pneumatic energy into sufficient power to displace the vehicle; said power assembly comprising:

1) at least one cylinder connected to the air supply line of the pneumatic assembly to receive compressed air in such a way that a piston member inside said cylinder moves forwardly;

2) a sliding element secured to the piston member rod displaceable in a straight line and parallel to a guide bar;

3) a first spur wheel arranged on one axle of the vehicle;

4) a second spur wheel arranged on the other axle of the vehicle;

5) a chain element connecting said first spur wheel with said second spur wheel, said chain element being fixedly attached to said sliding element; and

6) a ratchet mechanism engaged with at least one of the spur wheels, said ratchet mechanism allowing the displacement of the sliding and chain elements to be reciprocal, this being in a working stroke, and in the other direction, a non-working stroke; that is, a movement to return to the starting point of the displacement.

2. The vehicle according to claim 1, characterized by a quick-relief valve located to the rear of said at least one cylinder for ensuring that the return displacement of the reciprocating elements is at least as fast as the forward displacement thereof.

3. The vehicle according to claim 1 or 2, characterized in that the piston member rod of said cylinder is firmly secured to the sliding element which in turn, is connected with the chain element.

4. The vehicle according to one of the preceding claims, characterized in that the sliding element is provided with a slot that serves as a sliding guide.

5. The vehicle according to one of the preceding claims, characterized in that the air supply means comprises a valve element that regulates the supply of air to the power assembly in order to select the amount of air to be fed to said power assembly.

6. The vehicle according to one of the preceding claims characterized in that a manometer is arranged on the pneumatic line to visualize the pressure of air being fed to the power assembly from the storage tank.

7. The vehicle according to one of the preceding claims, characterized in that an elastic element is included adapted to facilitate the return stroke of the chain and the sliding elements and said piston member rod.

8. The vehicle according to one of the preceding claims, characterized in that the elastic element comprises a spring.

9. The vehicle according to one of the preceding claims, characterized in that the guide bar comprises stopper elements to delimit the joint displacement of the sliding and chain elements and the piston member rod.

10. The vehicle according to one of the preceding claims, characterized in that a filling valve for supply of air is included to the compressed air storage tank.

11. The vehicle according to one of the preceding claims, characterized in that it comprises a safety valve in the compressed air storage tank.

200     100

155

FIG.1

MANUEL TOSTADO TOSTADO, MEXICO, Mexico.

100

155

200

F I G . 2

MANUEL TOSTADO TOSTADO, MEXICO, Mexico.

FIG. 3

FIG.4

MANUEL TOSTADO TOSTADO, MEXICO, Mexico.

FIG. 5

MANUEL TOSTADO TOSTADO, MEXICO, Mexico.